(19) Europäisches Patentamt
European Patent Office
Office européen des brevets

(11) **EP 2 895 337 B1**

(12) **EUROPEAN PATENT SPECIFICATION**

(45) Date of publication and mention
of the grant of the patent:
**09.11.2016 Bulletin 2016/45**

(21) Application number: **13765308.5**

(22) Date of filing: **10.09.2013**

(51) Int Cl.:
*B60C 9/08* (2006.01)     *B60C 9/09* (2006.01)
*B60C 9/02* (2006.01)     *B60C 15/06* (2006.01)
*B60C 9/00* (2006.01)

(86) International application number:
**PCT/EP2013/068690**

(87) International publication number:
**WO 2014/040977 (20.03.2014 Gazette 2014/12)**

(54) **TYRE COMPRISING AN ADDITIONAL SIDEWALL REINFORCEMENT**

REIFEN MIT ZUSÄTZLICHER SEITENWANDVERSTÄRKUNG

PNEU COMPRENANT UN RENFORT DE FLANC SUPPLÉMENTAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2012 FR 1258513
20.12.2012 US 201261740019 P**

(43) Date of publication of application:
**22.07.2015 Bulletin 2015/30**

(73) Proprietors:
• **Compagnie Générale des Etablissements
Michelin
63000 Clermont-Ferrand (FR)**
• **MICHELIN Recherche et Technique S.A.
1763 Granges-Paccot (CH)**

(72) Inventor: **MONTEZIN, Cédric
F-63040 Clermont-Ferrand Cedex 9 (FR)**

(74) Representative: **Millanvois, Patrick Jacques Jean
Manufacture Française
des Pneumatiques Michelin
23, place des Carmes - Déchaux
DGD/PI - F35 - Ladoux
63040 Clermont-Ferrand Cedex 9 (FR)**

(56) References cited:
**EP-A1- 0 301 093     JP-A- S5 920 707
JP-A- H11 227 424     US-A1- 2008 149 249**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present invention relates to tyres for vehicles comprising textile carcass reinforcements. More particularly, it relates to the carcass reinforcements of these tyres.

BACKGROUND

When a tyre rolls on the ground in the usual conditions of use (in terms of speed and load), it may sustain impacts on the tread or the sidewalls the frequency and intensity of which are often considerable. It is one of the main functions of a tyre to absorb these impacts and to cushion them without the wheel of the vehicle being substantially affected, either in its movement or in its integrity.

However it happens that this absorption capability reaches its limits when the impact conditions are such that the impacted tyre sidewall reaches a stop inside the tyre chamber, either directly against the rim to which the tyre is fitted, or more usually against another area of the tyre sidewall that rests on the wheel rim. This is notably the case when the rim has an external radial protrusion from the proper seat. Such a protrusion, (usually called the "rim flange") is normally provided to prevent the tyre bead from coming off the rim under the effect of stresses of axial direction during manoeuvres of the wheel.

The impact may then transmit brief but very intense forces that can, in certain cases, reach several tonnes, to the parts of the tyre and rim that are in contact, but also, beyond the rim, to the mechanical suspension attachments of the wheel assembly, and even to the body of the vehicle. They are capable of doing serious damage to the suspension members and of permanently deforming the body of the vehicle. Vehicle designers are therefore led to provide damping systems that are sufficient to prevent this damage and to design the body of the vehicles according to normally predictable extreme cases.

Unfortunately, even when the vehicle itself is properly protected, the tyre subjected to this type of incident is likely to suffer consequences of the phenomenon that has just been mentioned. In the section affected by the impact, the inner wall of the tyre is suddenly folded and pinched between the obstacle and the rim flange ("pinch shock"). This can cause breakage of the wall and loss of inflation pressure which, most of the time, makes it necessary to stop the vehicle. But even when the tyre resists, its components may have been damaged by the incident; the expert can deduce from swellings in the sidewalls or other signs that the tyre structure has been weakened and that its wall may sooner or later break under the effect of the repeated flexing of its components.

Several ways have been proposed for reinforcing tyres in view of this "pinch shock" phenomenon. In most of these tyres, the carcass reinforcement is anchored in the bead by means of a turn-up around an annular reinforcement structure provided in the bead. The carcass reinforcement then comprises an "main portion" which extends from one bead to the other traversing the crown of the tyre, and two "wrapped-around portions" which extend from the annular reinforcement structure radially outwards. In order to reinforce a tyre against "pinch shock", it is notably known practise to extend the "wrapped-around portions" of the carcass reinforcement so that their radially outer end is sandwiched between the "main portion" of the carcass reinforcement and the crown reinforcement. This configuration is known as "shoulder lock".

Although an architecture of the "shoulder lock" type effectively makes the tyre less vulnerable to "pinch shock", it has the drawback that it is costly while not allowing a very fine adjustment of the performance of the tyre. In addition, this solution amplifies the problems of non-uniformity associated with the welds of the ply forming the carcass reinforcement because a weld is necessarily situated in the same location for the main portion and the wrapped-around portion.

Document US 2008/149249 A1 discloses a tyre comprising the features of the preamble of independent claim 1.

SUMMARY OF THE INVENTION

One of the objectives of the present invention is to respond to these concerns and to define a tyre that can withstand the "pinch shock" phenomenon while allowing a fine adjustment of its performance and good uniformity.

This objective is achieved by a tyre combining a carcass reinforcement that is "under proportioned", that is to say proportioned so that it cannot on its own, in all the reasonably predictable conditions of use, fulfil all the functions of a carcass reinforcement (withstanding the inflation pressure, support the load, absorb the impacts), and an appropriate additional reinforcement. The functions of the carcass reinforcement are therefore performed by the combination of the carcass reinforcement itself and the additional reinforcement, which makes it possible to optimize separately each of these reinforcements and to obtain an improved cost-performance ratio.

More precisely, the objective is achieved by a tyre having an axis of rotation and comprising:

two beads designed to come into contact with a mounting rim, each bead comprising at least one annular reinforcement structure having a point that is radially innermost,
two sidewalls extending the beads radially outwards, the two sidewalls coming together in a crown comprising a crown reinforcement radially surmounted by a tread;

a radial carcass reinforcement consisting of threadlike reinforcing elements having an elongation at break $EB_C$ and a force at break $FB_C$, placed at a pitch $P_C$ and coated with a rubber composition, the carcass reinforcement extending from one bead to the other, passing through the crown, the carcass reinforcement being anchored in each bead by a turn-up around the said at least one annular reinforcement structure, so as to form an main portion and a wrapped-around portion, the carcass reinforcement being designed so as to satisfy the inequality:

$$\frac{FB_C}{P_C} \le 1.5 \cdot 10^6 \cdot \frac{\left(R_S^2 - R_E^2\right)}{R_T},$$

where $FB_C$ is expressed in Newton, $R_S$ is the radial distance between the axis of rotation of the tyre and the radially outermost point of the carcass reinforcement, $R_E$ is the radial distance between the axis of rotation of the tyre and the axial position at which the tyre reaches its maximum axial width, and $R_T$ is the radial distance between the axis of rotation of the tyre and the radially innermost point of the said at least one annular reinforcement structure, the pitch $P_C$ and the radial distances $R_S$, $R_E$ and $R_T$ being expressed in metres;

each sidewall of the tyre also comprising an additional reinforcement consisting of threadlike reinforcing elements having an elongation at break $EB_A$ and a force at break $FB_A$, placed at a pitch $P_A$ and coated with a rubber composition, the additional reinforcement extending between a radially inner end that is close to the said at least one annular reinforcement structure of the bead extended by the sidewall, and a radially outer end situated radially between the carcass reinforcement and the crown reinforcement,

wherein $EB_A$, $FB_A$, $P_A$, $EB_C$, $FB_C$ and $P_C$ are chosen such that

$$\frac{FB_A}{P_S} \ge 1.3 \cdot \frac{FB_C}{P_C},$$

and

$$EB_C \ge EB_A,$$

it being understood that the forces at break $FB_A$ and $FB_C$, and the elongations at break $EB_C$ and $EB_A$ correspond to the values the reinforcing elements exhibit before they are incorporated into the tyre.

Specifically, the combination of an "under proportioned" carcass reinforcement and an additional reinforcement makes it possible to reduce the cost and the weight of the tyre and to increase its strength while giving the designer increased flexibility.

The invention makes it possible to reinforce the carcass reinforcement where it is greatly acted upon (that is to say in the sidewalls) while reducing its strength (and consequently its cost) in the zone where it is only slightly acted upon (that is to say in the crown), contrary to the "shoulder lock" which merely doubles the carcass reinforcement in the sidewall. The invention is therefore all the more advantageous if the sidewall is short and the crown wide, as occurs in certain higher performance, low aspect ratio tyres.

According to a first preferred embodiment, the crown reinforcement has, in each radial section, two axial ends and the radially outer end of each of the two additional reinforcements is axially inside the axial end of the closest crown reinforcement, the axial distance between the radially outer end of each additional reinforcement and of the axial end of the closest crown reinforcement being greater than or equal to 10 mm. Thus, the reinforcement is well anchored beneath the crown reinforcement which allows it to properly absorb the tensions and relieve the carcass reinforcement itself.

According to a second preferred embodiment, the radially inner end of each additional reinforcement is radially inside the radially outermost point of the wrapped-around portion of the carcass reinforcement and the radial distance DR between the radially inner end of each additional reinforcement and the radially outermost point of the wrapped-around portion of the carcass reinforcement is greater than or equal to 10 mm. This allows a correct anchoring of the additional reinforcement in the bead and consequently a good absorption of the tensions by the additional reinforcement.

According to a particular embodiment, each additional reinforcement extends, in the bead, along the main portion of the carcass reinforcement. This configuration has the advantage of simplifying the tyre manufacturing process.

Conventionally, tyres are made by placing plies on a drum, in which case the carcass reinforcement and the additional reinforcement each comprise at least one "weld" where the plies overlap. According to a particular embodiment, the weld of the carcass reinforcement is offset, in the circumferential direction, relative to the weld of the additional reinforcement. This embodiment, which cannot be achieved in an architecture of the "shoulder lock" type, makes it possible to improve the uniformity of the tyre.

According to an alternative embodiment, each additional reinforcement extends, in the bead, along the wrapped-around portion of the carcass reinforcement. Thus any contact between the additional reinforcement and the annular reinforcement structure is most certainly avoided, even when the length of the additional reinforcement is too great.

According to a particular embodiment, the reinforcing elements of each additional reinforcement are oriented radially. This design makes it possible to retain the overall compromise of performance associated with the radial structure of the carcass reinforcement (the compromise between comfort, rolling resistance, behaviour etc.) while improving the "pinch shock" performance.

According to another particular embodiment, the reinforcing elements of each additional reinforcement are inclined at an angle of between 40° and 80°, and preferably between 40° and 50°, relative to the radial direction. This design makes it possible to increase the vertical rigidity, which is beneficial for "pinch shock" performance while also orienting the reinforcing elements so as to promote the absorption of longitudinal tensions which improves their resistance to pavement impacts.

Notably, it is possible to make the reinforcing elements of the additional reinforcement of PET, of aramid, of aramid-nylon hybrid cords or else of aramid-PET hybrid cords. Reinforcing elements made of aramid or of hybrid cords are rarely used in the carcass reinforcement because they do not withstand compression very well. The carcass reinforcement is often subjected to compression, above all in tyres that have short sidewalls. On the other hand, the additional reinforcement is less subjected to compression, which makes it possible to use these reinforcing elements that are distinguished by their tenacity. The particular advantage of aramid-nylon hybrid cords lies in their high resistance to breakage, that of aramid-PET hybrid cords is that they have the qualities of aramid while having the rigidity of reinforcing elements made of PET.

Naturally, it is possible (and may even be advantageous) to link together several of these embodiments to obtain a particularly high-performance tyre.

The invention as described above relates to tyres having a turn-up of the carcass reinforcement around an annular reinforcement structure. Naturally, it would be possible to provide an additional reinforcement as described in a tyre in which the reinforcement is anchored between a plurality of annular reinforcement structures, such as for example the architectures obtained in the "C3M" method of Michelin, well known to those skilled in the art.

BRIEF DESCRIPTION OF THE DRAWINGS

Figure 1 represents a tyre according to the prior art.

Figure 2 represents a partial view in perspective of a tyre according to the prior art.

Figure 3 represents, in radial section, a portion of a reference tyre.

Figure 4 represents, in radial section, a portion of a reference tyre having a "shoulder lock" configuration.

Figures 5 and 7 represent, in radial section, a portion of a tyre according to an embodiment of the invention.

Figure 6 illustrates the distribution of the tensions between the carcass reinforcement and the additional reinforcement, on the sidewall.

Figure 8 illustrates certain parameters used to characterize a tyre according to an embodiment of the invention.

DETAILED DESCRIPTION OF THE FIGURES

In the use of the term "radial", several different uses of the word by those skilled in the art need to be distinguished. First, the expression refers to a radius of the tyre. It is in this meaning that it is said that a point P1 is "radially inside" a point P2 (or "radially on the inside" of point P2) if it is closer to the axis of rotation of the tyre than point P2. Conversely, a point P3 is said to be "radially outside" a point P4 (or "radially on the outside" of point P4) if it is further from the axis of rotation of the tyre than point P4. It will be said that a movement is "radially towards the inside (or the outside)" when the movement is in the direction of the shortest (or longest) radii. When radial distances are referred to, this meaning of the term also applies.

On the other hand, a thread or a reinforcement is called "radial" when the thread or the reinforcing elements of the reinforcement make with the circumferential direction an angle greater than or equal to 80° and less than or equal to 90°. In the present document, the term "thread" should be understood to have the wholly general meaning and includes the threads that take the form of monofilaments, multifilaments, a cord, a folded yarn or an equivalent assembly, irrespective of the material forming the thread or the surface treatment to promote its connection with the rubber. In the present document, the term "threadlike" should be understood to mean a thread as indicated above, or a cord, or other structure having a length much larger than its thickness, and suitable for performing the reinforcement functions described herein.

Finally "radial section" in this instance means a section on a plane that contains the axis of rotation of the tyre.

An "axial" direction is a direction parallel to the axis of rotation of the tyre. A point P5 is said to be "axially inside" a point P6 (or "axially on the inside" of point P6) if it is closer to the mid-plane of the tyre than point P6. Conversely, a point P7 is said to be "axially outside" a point P8 (or "axially on the outside" of point P8) if it is further from the mid-plane of the tyre than point P8. The "mid-plane" of the tyre is the plane that is perpendicular to the axis of rotation of the tyre and that is situated equidistant from the annular reinforcement structures of each bead.

A "circumferential" direction is a direction that is perpendicular both to a radius of the tyre and to the axial direction.

In the context of this document, the expression "rubber composition" is a rubber composition comprising at least one elastomer and one filler.

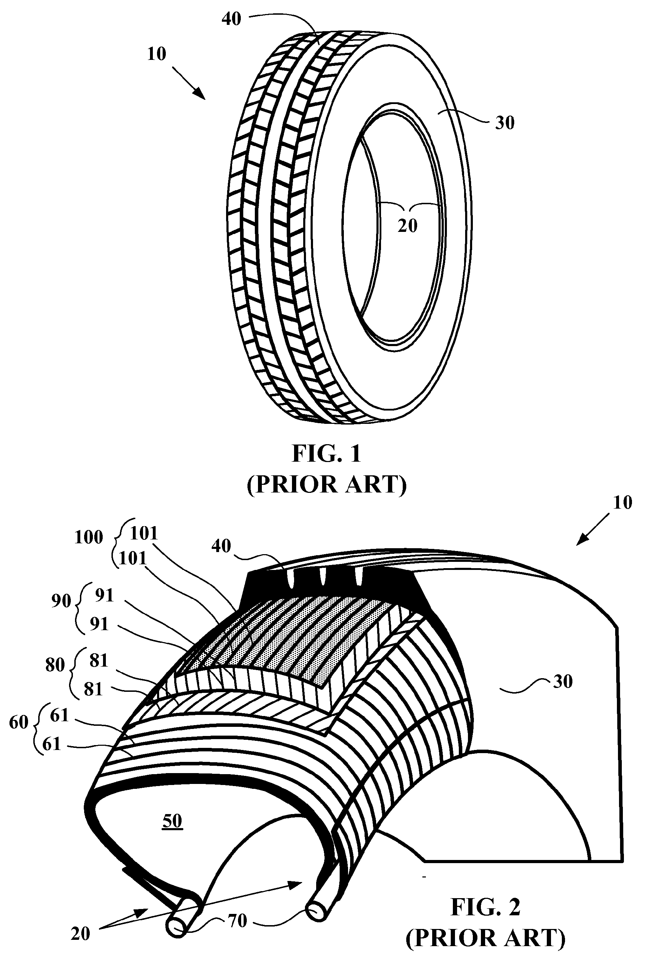

Figure 1 represents schematically a tyre 10 according to the prior art. The tyre 10 comprises a crown comprising a crown reinforcement (invisible in Figure 1) surmounted by a tread 40, two sidewalls 30 extending the crown radially towards the inside, and two beads 20 radially inside the sidewalls 30.

Figure 2 represents schematically a partial view in perspective of a tyre 10 according to the prior art and illustrates the various components of the tyre. The tyre 10 comprises a carcass reinforcement 60 consisting of threads 61 coated with a rubber composition, and two beads 20 each comprising annular reinforcement structures 70 that keep the tyre 10 on the rim (not shown). The carcass reinforcement 60 is anchored in each of the beads 20 by a turn-up. The tyre 10 also comprises a crown reinforcement comprising two plies 80 and 90. Each of the plies 80 and 90 is reinforced by threadlike reinforcing elements 81 and 91 that are parallel in each layer and crossed from one layer to another, while making with the circumferential direction angles of between 10° and 70°. The tyre also comprises a hooping reinforcement 100 placed radially on the outside of the crown reinforcement, this hooping reinforcement being formed of reinforcing elements 101 oriented circumferentially and wound in a spiral. A tread 40 is placed on the hooping reinforcement; it is this tread 40 that makes the contact of the tyre 10 with the road. The tyre 10 that is shown is a "tubeless" tyre: it comprises an "inner liner" 50 made of a butyl-based rubber composition, impermeable to the inflation gas, covering the internal surface of the tyre.

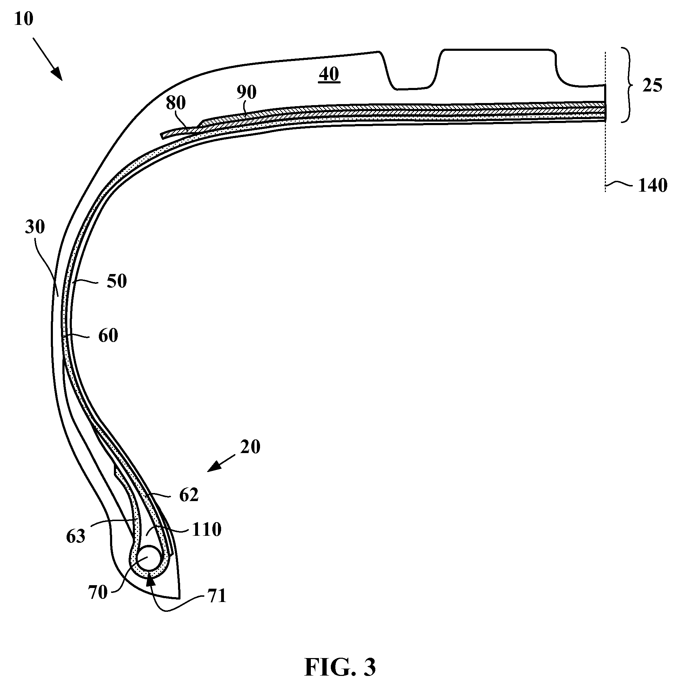

Figure 3 represents, in radial section, half of a reference tyre. This tyre has an axis of rotation (not shown) and comprises two beads 20 designed to come into contact with a mounting rim (not shown), each bead comprising an annular reinforcement structure, in this instance a bead wire 70. The radially innermost point of the bead wire bears the reference 71.

The tyre comprises two sidewalls 30 extending the beads radially towards the outside, the two sidewalls 30 joining in a crown 25 comprising a crown reinforcement formed by the plies 80 and 90. The crown reinforcement is surmounted by a tread 40. In principle, it would be possible also to provide a hooping reinforcement like the hooping reinforcement 100 of the tyre shown in Figure 2, but in this instance an attempt has been made to minimize the weight of the tyre by providing no hooping reinforcement.

The tyre comprises only one radial carcass reinforcement 60 extending from the beads 20 across the side walls 30 to the crown, the carcass reinforcement 60 comprising a plurality of carcass reinforcing elements. It is anchored in the two beads 20 by a turn-up around the bead wire 70 so as to form an main portion 62 and a wrapped-around portion 63. The filling 110 formed of a rubber composition fills the volume between the main portion 62 and the wrapped-around portion 63.

The mid-plane of the tyre is indicated using reference 140.

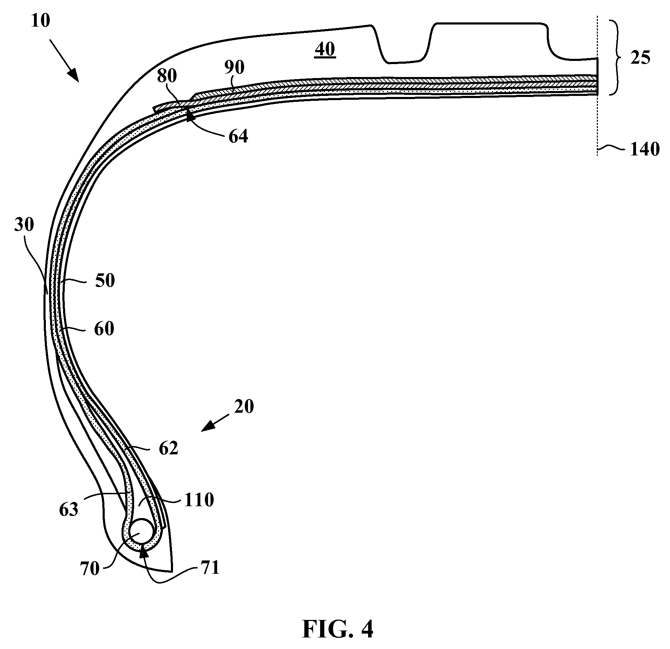

Figure 4 represents, in radial section, a portion of another reference tyre having a "shoulder lock" configuration. Unlike the tyre shown in Figure 3, the wrapped-around portion 63 does not terminate in the bead but extends up to the crown. Its radially outer end 64 is housed between the ply 80 of the crown reinforcement and the main portion 62 of the carcass reinforcement. Thus, the carcass reinforcement 60 is doubled in the whole bead 20 and the sidewall 30, which significantly increases the resistance of the tyre to "pinch shock" phenomena.

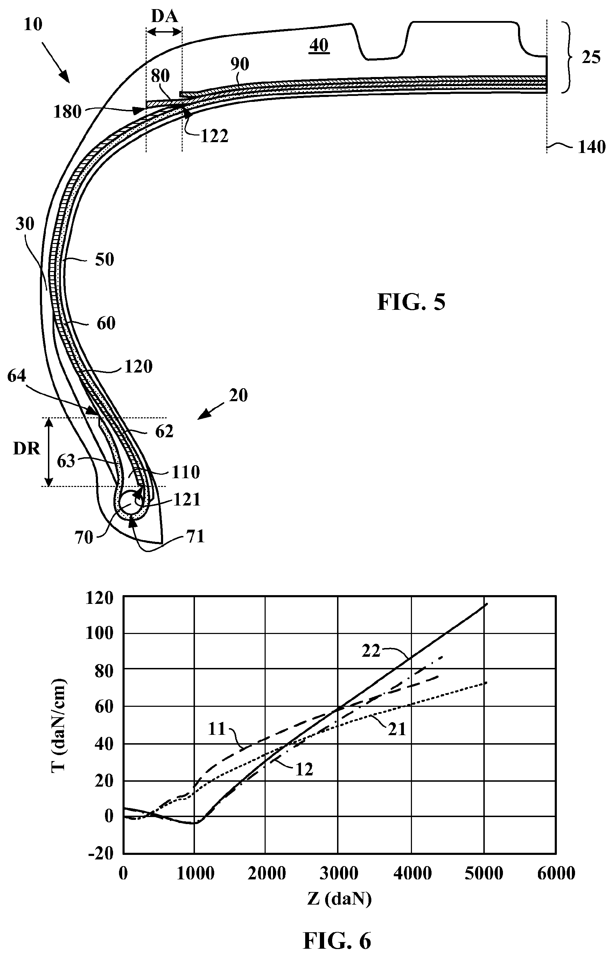

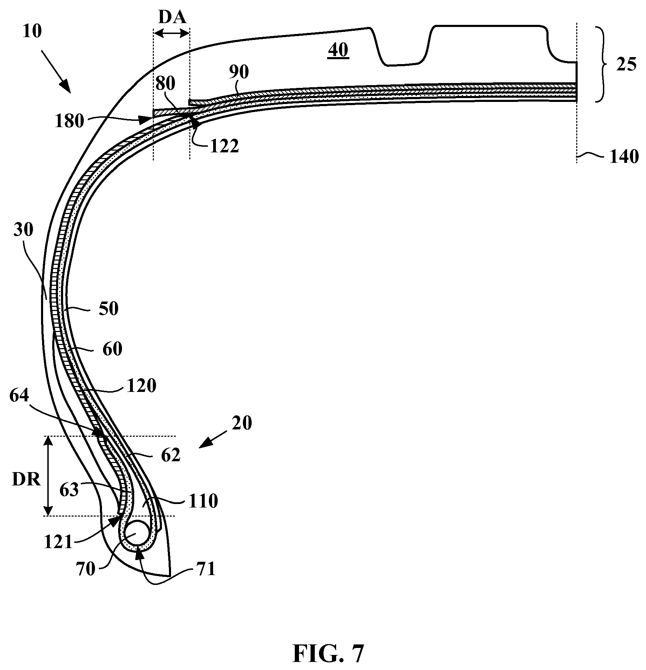

The drawback of this architecture is that it is costly - because it requires using the same reinforcement in the sidewalls and in the crown, although it would be possible to lighten the carcass reinforcement in the crown - while not allowing a very fine adjustment of the performance of the tyre. The tyre according to the invention of which two embodiments are shown in Figures 5 and 7 makes it possible to overcome these drawbacks.

The tyre according to an embodiment of the invention of Figure 5 comprises two beads 20 (of which only one is shown) designed to come into contact with a mounting rim (not shown), each bead comprising an annular reinforcement structure, in this instance a bead wire 70 having a point 71 that is radially innermost. It also comprises two sidewalls 30 extending the beads 20 radially towards the outside, the two sidewalls joining in a crown 25 comprising a crown reinforcement formed by the two plies 80 and 90 and radially surmounted by a tread 40. A radial carcass reinforcement 60 formed of threadlike reinforcing elements having an elongation at break $EB_C$ and a force at break $FB_C$ and coated with a rubber composition, extends from one bead 20 to the other, passing through the crown 25. The carcass reinforcement 60 is anchored in each bead 20 by a turn-up around the bead wire 70 so as to form a main portion 62 and a wrapped-around portion 63. It is designed to satisfy the inequality:

$$\frac{FB_C}{P_C} \leq 1.5 \cdot 10^6 \cdot \frac{\left(R_S^2 - R_E^2\right)}{R_T}$$

$P_C$ is the pitch of the reinforcing elements of the carcass reinforcement (that is to say 1 divided by the number of reinforcing elements per metre and therefore expressed in metres) in the vicinity of the bead wire 70; the force at break $FB_C$ is expressed in Newton.

The meaning of the parameters $R_S$, $R_E$ and $R_T$

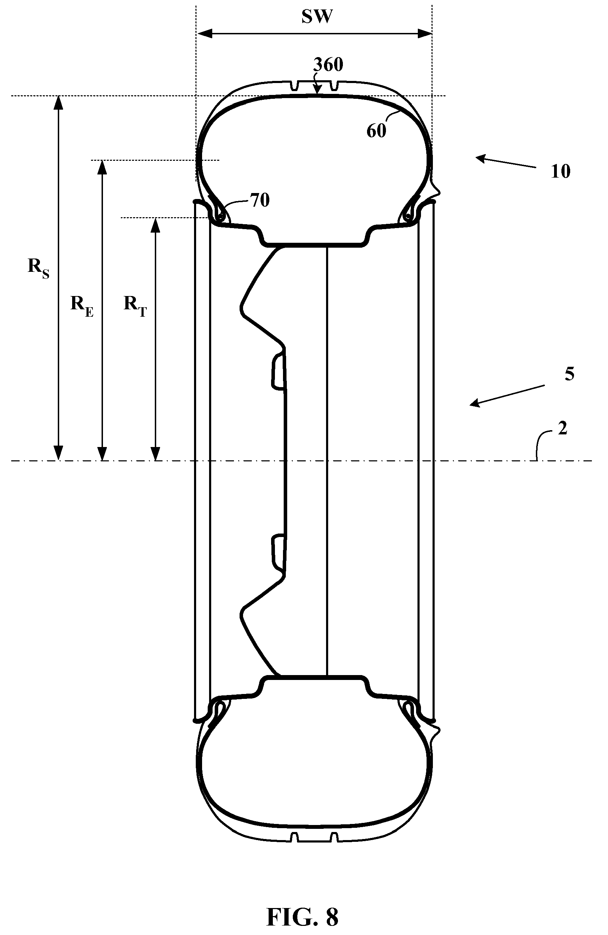

is illustrated in Figure 8. $R_S$ is the radial distance between the axis of rotation 2 of the tyre 10 and the radially outermost point 360 of the carcass reinforcement 60, $R_E$ is the radial distance between the axis of rotation 2 and the axial position in which the tyre reaches its maximum axial width SW, and $R_T$ is the radial distance between the axis of rotation 2 and the radially innermost point 71 of the bead wire 70 (indicated in Figure 5). The radial distances $R_S$, $R_E$ and $R_T$ are expressed in metres.

As suggested in Figure 5, each sidewall 30 of the tyre 10 according to an embodiment of the invention comprises an additional reinforcement 120 consisting of threadlike reinforcing elements having an elongation at break $EB_A$ and a force at break $FB_A$ placed at a pitch $P_A$ and coated with a rubber composition, the additional reinforcement extending between a radially inner end 121 that is close to the bead wire 70 and a radially outer end 122 situated radially between the carcass reinforcement and the crown reinforcement. $FB_A$, $P_A$, $FB_C$ and $P_C$ are chosen such that

$$\frac{FB_A}{P_A} \geq 1.3 \cdot \frac{FB_C}{P_C}$$

This difference in the break forces can be obtained by various means known per se to those skilled in the art. It is possible notably to vary the size, the torsion, the material or else the heat treatment undergone by the reinforcing elements in order to obtain the required difference.

The elongation at break $EB_C$ of the reinforcing elements of the carcass reinforcement is greater than or equal to an elongation at break $EB_A$ of the reinforcing elements of each of the additional reinforcements ($EB_C \geq EB_A$).

The forces at break $FB_A$ and $FB_C$, and the elongations at break $EB_C$ and $EB_A$ correspond to the values the reinforcing elements exhibit before they are incorporated into the tyre.

Before the measurement is carried out, the reinforcing elements have to undergo a preconditioning treatment; "preconditioning treatment" refers to the reinforcing elements being stored (after drying) for at least 24 hours in a standard atmosphere according to European standard DIN EN 20139 (temperature of $20 \pm 2°C$, relative humidity of $65 \pm 2\%$) before the measurements are carried out.

Then the force at break and the elongation at break are measured; this is done in a manner well known to those skilled in the art with the aid of an "INSTRON" tensioning machine (see also the ASTM D 885-06 standard). The tested samples undergo tensioning over an initial length L0 (in mm) at a nominal speed of L0 mm/min, under a standard pre-tension of 1 cN/tex (the average for at least 10 measurements). The force at break that is retained is the maximum measured force.

The crown reinforcement has, in each radial section, two axial ends 180 (of which only one is shown). The radially outer end 122 of each of the two additional reinforcements 120 is axially on the inside of the axial end of the closest crown reinforcement, the axial distance DA between the radially outer end 122 of each additional reinforcement and the axial end 180 of the closest crown reinforcement being in this instance equal to 10 mm.

The radially inner end 121 of the additional reinforcement 120 is radially inside the point 64 that is radially outermost of the wrapped-around portion 63 of the carcass reinforcement 60 and the radial distance DR between the radially inner end 121 of the additional reinforcement 120 and the radially outermost point 71 of the wrapped-around portion 63 of the carcass reinforcement 60 is in this instance equal to 16 mm.

In the tyre according to an embodiment of the invention shown in Figure 5, each additional reinforcement 120 extends, in the bead 20, along the main portion 62 of the carcass reinforcement 60. This is not an essential feature of the invention; it is perfectly possible to provide that each additional reinforcement 120 extends, in the bead 20, along the wrapped-around portion 63 of the carcass reinforcement, as shown in Figure 7.

In the tyres shown in Figures 5 and 7, the reinforcing elements of each additional reinforcement 120 are oriented radially, but it is equally possible to use additional reinforcements 120 of which the reinforcing elements are inclined at an angle of between 40° and 80° and preferably between 40° and 50° relative to the radial direction.

The reinforcing elements of the additional reinforcement 120 of the tyres shown in Figures 5 and 7 are made of PET, but other choices are possible, such as for example cords made of aramid, aramid-nylon hybrid cords or else aramid-PET hybrid cords.

Figure 6 shows results of calculations concerning a tyre sidewall subjected to great deformations. The distributed tension T (in daN/cm) is drawn as a function of the load Z (in daN). The curves 11 and 12 correspond to the reference tyre of Figure 4 ("shoulder lock" configuration). The carcass reinforcement comprises 220x2 reinforcing elements (each reinforcing element consists of two threads each having a linear density of 200 tex) in PET. The force at break of each reinforcing element is 268 daN/cm, which means that the total force at break is equal to 528 daN/cm. The curve 11 shows the tension absorbed by the reinforcing elements of the main portion 62 of the carcass reinforcement, the curve 12 shows that absorbed by the reinforcing elements of the wrapped-around portion 63. It is found that, when the load is considerable, it is the reinforcing elements of the wrapped-around portion that absorb more tension. The curves 21 and 22 correspond to the tyre of Figure 5. The carcass reinforcement comprises 144x2 reinforcing elements in PET. The force at break of each reinforcing element is 187 daN/cm. The additional reinforcement comprises 334x2 reinforcing elements in PET. The force at break of each reinforcing element is 328 daN/cm. The total force at break is therefore equal to 515 daN/cm. The curve 21 represents the tension absorbed by the reinforcing elements of the carcass reinforcement 60, the curve 22 shows that absorbed by the reinforcing elements of the additional reinforcement 120. Although the total force at break is less, the tyre according to an embodiment of the invention breaks at significantly higher loads than the reference tyre, which clearly illustrates the value of linking an "under proportioned" carcass reinforcement with an additional reinforcement the force at break of which is greater.

These calculation results have subsequently been confirmed by tyre tests.

## Claims

1. Tyre having an axis of rotation (2) and comprising:

   two beads (20) designed to come into contact with a mounting rim (5), each bead comprising at least one annular reinforcement structure (70) having a point (71) that is radially innermost, two sidewalls (30) extending the beads radially outwards, the two sidewalls coming together in a crown (25) comprising a crown reinforcement (80, 90) radially surmounted by a tread (40); a radial carcass reinforcement (60) consisting of threadlike reinforcing elements (61) having an elongation at break $EB_C$ and a force at break $FB_C$, placed at a pitch $P_C$ and coated with a rubber composition, the carcass reinforcement extending from one bead to the other, passing through the crown, the carcass reinforcement being anchored in each bead by a turn-up around the said at least one annular reinforcement structure, so as to form an main portion (62) and a wrapped-around portion (63), each sidewall of the tyre also comprising an additional reinforcement (120) extending between a radially inner end (121) that is close to the said at least one annular reinforcement structure of the bead extended by the sidewall, and a radially outer end (122) situated radially between the carcass reinforcement and the crown reinforcement, **characterized by** the carcass reinforcement being designed so as to satisfy the inequality:

$$\frac{FB_C}{P_C} \leq 1.5 \cdot 10^6 \cdot \frac{\left(R_S^2 - R_E^2\right)}{R_T},$$

   where $FB_C$ is expressed in Newton, $R_S$ is the radial distance between the axis of rotation of the tyre and the radially outermost point (360) of the carcass reinforcement, $R_E$ is the radial distance between the axis of rotation of the tyre and the axial position at which the tyre reaches its maximum axial width, and $R_T$ is the radial distance between the axis of rotation of the tyre and the radially innermost point of the said at least one annular reinforcement structure, the pitch $P_C$ and the radial distances $R_S$, $R_E$ and $R_T$ being expressed in metres; the additional reinforcement consisting of threadlike reinforcing elements having an elongation at break $EB_A$ and a force at break $FB_A$, placed at a pitch $P_A$ and coated with a rubber composition, wherein $EB_A$, $FB_A$, $P_A$, $EB_C$, $FB_C$ and $P_C$ are chosen such that

$$\frac{FB_A}{P_A} \geq 1.3 \cdot \frac{FB_C}{P_C},$$

   and

$$EB_C \geq EB_A,$$

   it being understood that the forces at break $FB_A$ and $FB_C$, and the elongations at break $EB_C$ and $EB_A$ correspond to the values the reinforcing elements exhibit before they are incorporated into the tyre.

2. Tyre according to Claim 1, wherein the crown reinforcement (80, 90) has, in each radial section, two axial ends (180) and wherein the radially outer end (122) of each of the two additional reinforcements is axially inside the axial end of the closest crown reinforcement, the axial distance (DA) between the radially outer end of each additional reinforcement and of the axial end of the closest crown reinforcement being greater than or equal to 10 mm.

3. Tyre according to either one of Claims 1 and 2, wherein the radially inner end (121) of each additional reinforcement (120) is radially inside the radially outermost point (64) of the wrapped-around portion (63) of the carcass reinforcement (60) and the radial distance (DR) between the radially inner end (121) of each additional reinforcement and the radially outermost point (64) of the wrapped-around portion of the carcass reinforcement is greater than or equal to 10 mm.

4. Tyre according to any one of Claims 1 to 3, wherein each additional reinforcement (120) extends, in the bead (20), along the main portion (62) of the carcass reinforcement (60).

**5.** Tyre according to Claim 4, wherein the carcass reinforcement (60) and the additional reinforcement (120) each comprise at least one weld and wherein the weld of the carcass reinforcement is offset, in the circumferential direction, relative to the weld of the additional reinforcement.

**6.** Tyre according to any one of Claims 1 to 3, wherein each additional reinforcement (120) extends, in the bead (20), along the wrapped-around portion (63) of the carcass reinforcement (60).

**7.** Tyre according to any one of Claims 1 to 4, wherein the reinforcing elements of each additional reinforcement (120) are oriented radially.

**8.** Tyre according to any one of Claims 1 to 4, wherein the reinforcing elements of each additional reinforcement (120) are inclined at an angle of between 40° and 80°, and preferably between 40° and 50°, relative to the radial direction.

**9.** Tyre according to any one of Claims 1 to 7, wherein the reinforcing elements of the additional reinforcement (120) are made of PET.

**10.** Tyre according to any one of Claims 1 to 7, wherein the reinforcing elements of the additional reinforcement (120) are aramid-nylon hybrid cords.

**11.** Tyre according to any one of Claims 1 to 7, wherein the reinforcing elements of the additional reinforcement (120) are aramid cords or aramid-PET hybrid cords.

**Patentansprüche**

**1.** Reifen, der eine Drehachse (2) aufweist und Folgendes umfasst:

zwei Reifenwulste (20), die konstruiert sind, mit einer Felge (5) in Kontakt zu kommen, wobei jeder Reifenwulst mindestens eine ringförmige Verstärkungsstruktur (70), die einen radial am weitesten innen liegenden Punkt (71) aufweist, umfasst,

zwei Seitenwände (30), die die Reifenwulste radial nach außen erweitern, wobei die zwei Seitenwände in einer Wölbung (25) zusammenkommen, die eine Wölbungsverstärkung (80, 90), die radial von einer Lauffläche (40) überragt wird, umfasst;

eine radiale Karkassenverstärkung (60), die aus fadenförmigen Verstärkungselementen (61) besteht, die eine Bruchdehnung $EB_C$ und eine Bruchkraft $FB_C$ aufweisen, die ferner mit einer Teilung $P_C$ angeordnet sind und mit einer Gummizusammensetzung beschichtet sind, wobei sich die Karkassenverstärkung von einem Reifenwulst zum anderen erstreckt, wobei sie durch die Wölbung verläuft, wobei die Karkassenverstärkung ferner in jedem Reifenwulst durch einen Umschlag um die mindestens eine ringförmige Verstärkungsstruktur derart verankert ist, dass sie einen Hauptabschnitt (62) und einen herumgewickelten Abschnitt (63) bildet, wobei jede seitenwand des Reifens außerdem eine zusätzliche Verstärkung (120) umfasst, die sich zwischen einem radial inneren Ende (121), das nahe an der mindestens einen ringförmigen Verstärkungsstruktur des Reifenwulstes liegt, der durch die Seitenwand erweitert wird, und einem radial äußeren Ende (122), das radial zwischen der Karkassenverstärkung und der Wölbungsverstärkung liegt, erstreckt,
**dadurch gekennzeichnet, dass**
die Karkassenverstärkung derart konstruiert ist, dass sie die folgende Ungleichung erfüllt:

$$\frac{FB_C}{P_C} \leq 1,5 \cdot 10^6 \cdot \frac{\left(R_S^2 - R_E^2\right)}{R_T},$$

wobei $FB_C$ in Newton ausgedrückt wird, $R_S$ der radiale Abstand zwischen der Drehachse des Reifens und dem radial am weitesten außen liegenden Punkt (360) der Karkassenverstärkung ist, $R_E$ der radiale Abstand zwischen der Drehachse des Reifens und der axialen Position ist, an der der Reifen seine maximale, axiale Breite erreicht, und $R_T$ der radiale Abstand zwischen der Drehachse des Reifens und dem radial am weitesten innen liegenden Punkt der mindestens einen ringförmigen Verstärkungsstruktur ist, wobei die Teilung $P_C$ und die radialen Abstände $R_S$, $R_E$ und $R_T$ in Metern ausgedrückt werden;
wobei die zusätzliche Verstärkung aus fadenförmigen Verstärkungselementen besteht, die eine Bruchdehnung $EB_A$ und eine Bruchkraft $FB_A$ aufweisen, die ferner mit einer Teilung $P_A$ angeordnet sind und mit einer Gummizusammensetzung beschichtet sind,
wobei $EB_A$, $FB_A$, $P_A$, $EB_C$, $FB_C$ und $P_C$ derart gewählt sind, dass

$$\frac{FB_A}{P_A} \geq 1,3 \cdot \frac{FB_C}{P_C},$$

und

$$EB_C \geq EB_A,$$

wobei dies so zu verstehen ist, dass die Bruchkräfte FB$_A$ und FB$_C$ und die Bruchdehnungen EB$_C$ und EB$_A$ den Werten entsprechen, die die Verstärkungselemente aufweisen, bevor sie in den Reifen eingebaut werden.

2. Reifen nach Anspruch 1, wobei die Wölbungsverstärkung (80, 90) in jedem radialen Abschnitt zwei axiale Enden (180) aufweist und wobei das radial äußere Ende (122) jeder der zwei zusätzlichen Verstärkungen axial innerhalb des axialen Endes der am nächsten liegenden Wölbungsverstärkung liegt, wobei der axiale Abstand (DA) zwischen dem radial äußeren Ende jeder zusätzlichen Verstärkung und dem axialen Ende der am nächsten liegenden Wölbungsverstärkung größer oder gleich 10 mm ist.

3. Reifen nach einem der Ansprüche 1 oder 2, wobei das radial innere Ende (121) jeder zusätzlichen Verstärkung (120) radial innerhalb des radial am weitesten außen liegenden Punktes (64) des herumgewickelten Abschnitts (63) der Karkassenverstärkung (60) liegt und der radiale Abstand (DR) zwischen dem radial inneren Ende (121) jeder zusätzlichen Verstärkung und dem radial am weitesten außen liegenden Punkt (64) des herumgewickelten Abschnitts der Karkassenverstärkung größer oder gleich 10 mm ist.

4. Reifen nach einem der Ansprüche 1 bis 3, wobei sich jede zusätzliche Verstärkung (120) in dem Reifenwulst (20) entlang des Hauptabschnitts (62) der Karkassenverstärkung (60) erstreckt.

5. Reifen nach Anspruch 4, wobei die Karkassenverstärkung (60) und die zusätzliche Verstärkung (120) jede mindestens eine Schweißnaht umfassen und wobei die Schweißnaht der Karkassenverstärkung in Umfangsrichtung relativ zur Schweißnaht der zusätzlichen Verstärkung versetzt ist.

6. Reifen nach einem der Ansprüche 1 bis 3, wobei sich jede zusätzliche Verstärkung (120) in dem Reifenwulst (20) entlang des herumgewickelten Abschnitts (63) der Karkassenverstärkung (60) erstreckt.

7. Reifen nach einem der Ansprüche 1 bis 4, wobei die Verstärkungselemente jeder zusätzlichen Verstärkung (120) radial ausgerichtet sind.

8. Reifen nach einem der Ansprüche 1 bis 4, wobei die Verstärkungselemente jeder zusätzlichen Verstärkung (120) unter einem Winkel von zwischen 40° und 80° und vorzugsweise von zwischen 40° und 50° relativ zur radialen Richtung geneigt sind.

9. Reifen nach einem der Ansprüche 1 bis 7, wobei die Verstärkungselemente der zusätzlichen Verstärkung (120) aus PET hergestellt sind.

10. Reifen nach einem der Ansprüche 1 bis 7, wobei die Verstärkungselemente der zusätzlichen Verstärkung (120) Aramid-Nylon-Hybrid-Schnüre sind.

11. Reifen nach einem der Ansprüche 1 bis 7, wobei die Verstärkungselemente der zusätzlichen Verstärkung (120) Aramid-Schnüre oder Aramid-PET-Hybrid-Schnüre sind.

**Revendications**

1. Pneumatique ayant un axe de rotation (2) et comportant :

deux bourrelets (20) destinés à entrer en contact avec une jante de montage (5), chaque bourrelet comportant au moins une structure annulaire de renforcement (70) ayant un point (71) radialement le plus à l'intérieur, deux flancs (30) prolongeant les bourrelets radialement vers l'extérieur, les deux flancs s'unissant dans un sommet (25) comportant une armature de sommet (80, 90), radialement surmontée d'une bande de roulement (40) ; une armature de carcasse (60) radiale constituée d'éléments de renforcement (61) filaires ayant un allongement à la rupture AR$_C$ et une force à la rupture FR$_C$, posés à un pas de pose P$_C$ et enrobés de composition caoutchouteuse, l'armature de carcasse s'étendant d'un bourrelet à l'autre, en passant par le sommet, l'armature de carcasse étant ancrée dans chaque bourrelet par un retournement autour de ladite au moins une structure annulaire de renforcement, de manière à former un brin aller (62) et un brin retour (63), chaque flanc du pneumatique comportant en outre une armature de renfort supplémentaire (120), s'étendant entre une extrémité (121) radialement intérieure se trouvant à proximité de ladite au moins une structure annulaire de renforcement du bourrelet que prolonge le flanc, et une extrémité (122) radialement extérieure située radialement entre l'armature de carcasse et l'armature de sommet, **caractérisé en ce que** :

l'armature de carcasse étant dimensionnée de manière à satisfaire l'inégalité :

$$\frac{FR_C}{P_C} \leq 1.5 \cdot 10^6 \cdot \frac{\left(R_S^2 - R_E^2\right)}{R_T},$$

où FR$_C$ est exprimé en Newton, R$_S$ est la distance radiale entre l'axe de rotation du pneumatique et le point (360) radialement le plus à l'extérieur de l'armature de carcasse, $R_E$ est la distance radiale entre l'axe de rotation du pneumatique et la position axiale où le pneumatique atteint sa largeur axiale maximale, et $R_T$ est la distance radiale entre l'axe de rotation du pneumatique et le point radialement le plus à l'intérieur de ladite au moins une structure annulaire de renforcement, le pas de pose $P_C$ et les distances radiales $R_S$, $R_E$ et $R_T$ étant exprimées en mètres ;

l'armature de renfort supplémentaire étant constituée d'éléments de renforcement filaires ayant un allongement à la rupture $AR_S$ et une force à la rupture $FR_S$, posés à un pas de pose $P_S$ et enrobés de composition caoutchouteuse, dans lequel dans lequel $AR_S$, $FR_S$, $P_S$, $AR_C$, $FR_C$ et $P_C$, sont choisis tels que

$$\frac{FR_S}{P_S} \geq 1.3 \cdot \frac{FR_C}{P_C},$$

et

$$AR_C \geq AR_S,$$

étant précisé que les forces à la rupture et $FR_S$ et $FR_C$, ainsi que les allongements à la rupture $AR_C$ et $AR_S$ correspondent aux valeurs que les éléments de renforcement possèdent avant incorporation dans le pneumatique.

2. Pneumatique selon la revendication 1, dans lequel l'armature de sommet (80, 90) a, dans chaque section radiale, deux extrémités axiales (180) et dans lequel l'extrémité (122) radialement extérieure de chacune des deux armatures de renfort supplémentaire est axialement à l'intérieur de l'extrémité axiale de l'armature de sommet la plus proche, la distance axiale (DA) entre l'extrémité radialement extérieure de chaque armature de renfort supplémentaire et de l'extrémité axiale de l'armature de sommet la plus proche étant supérieure ou égale à 10 mm.

3. Pneumatique selon l'une quelconque des revendications 1 ou 2, dans lequel l'extrémité (121) radialement intérieure de chaque armature de renfort supplémentaire (120) est radialement à l'intérieur du point (64) radialement le plus à l'extérieur du brin retour (63) de l'armature de carcasse (60) et la distance radiale (DR) entre l'extrémité (121) radialement intérieure de chaque armature de renfort supplémentaire et le point (64) radialement le plus à l'extérieur du brin retour de l'armature de carcasse est supérieur ou égal à 10 mm.

4. Pneumatique selon l'une quelconque des revendications 1 à 3, dans lequel chaque armature de renfort supplémentaire (120) s'étend, dans le bourrelet (20), le long du brin aller (62) de l'armature de carcasse (60).

5. Pneumatique selon la revendication 4, dans lequel l'armature de carcasse (60) et l'armature de renfort supplémentaire (120) comportent chacune au moins une soudure par recouvrement et dans lequel la soudure de l'armature de carcasse est décalée, dans la direction circonférentielle, par rapport à la soudure de l'armature de renfort supplémentaire.

6. Pneumatique selon l'une quelconque des revendications 1 à 3, dans lequel chaque armature de renfort supplémentaire (120) s'étend, dans le bourrelet (20), le long du brin retour (63) de l'armature de carcasse (60).

7. Pneumatique selon l'une quelconque des revendications 1 à 4, dans lequel les éléments de renforcement de chaque armature de renfort supplémentaire (120) sont orientés radialement.

8. Pneumatique selon l'une quelconque des revendications 1 à 4, dans lequel les éléments de renforcement de chaque armature de renfort supplémentaire (120) sont inclinés à un angle compris entre 40° et 80°, et de préférence entre 40° et 50°, par rapport à la direction radiale.

9. Pneumatique selon l'une quelconque des revendications 1 à 7, dans lequel les éléments de renforcement de l'armature de renfort supplémentaire (120) sont réalisés en PET.

10. Pneumatique selon l'une quelconque des revendications 1 à 7, dans lequel les éléments de renforcement de l'armature de renfort supplémentaire (120) sont des câbles hybrides aramide/nylon.

11. Pneumatique selon l'une quelconque des revendications 1 à 7, dans lequel les éléments de renforcement de l'armature de renfort supplémentaire (120) sont des câbles en aramide ou des câbles hybrides aramide/PET.

**FIG. 1**
**(PRIOR ART)**

**FIG. 2**
**(PRIOR ART)**

**FIG. 3**

FIG. 4

**FIG. 5**

**FIG. 6**

**FIG. 7**

**FIG. 8**

**EP 2 895 337 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008149249 A1